# EUROPÄISCHE PATENTSCHRIFT

(11) **EP 2 319 306 B1**
(45) Veröffentlichungstag und Bekanntmachung des Hinweises auf die Patenterteilung: **10.04.2013**
(21) Anmeldenummer: 10014331.2
(22) Anmeldetag: 05.11.2010
(51) Int. Cl.: A01M 7/00

(54) **Teleskopisches Spritzgestänge für Feldspritzen mit Düsenschaltung**
Telescopic spray bar for field spraying devices with nozzle switch
Rampe de pulvérisation télescopique dotée d'une commutation de buses

(30) Priorität: 06.11.2009 DE 102009053212; 06.11.2009 DE 102009053213
(43) Veröffentlichungstag der Anmeldung: 11.05.2011
(73) Patentinhaber: Lemken GmbH & Co. KG, 46519 Alpen (DE)
(72) Erfinder: Basten, Alexander, 54338 Schweich (DE); Bornemann, Ralf, 46244 Bottrop (DE)
(74) Vertreter: Schulte & Schulte

(56) Entgegenhaltungen:
- EP-A1- 1 346 637
- EP-A2- 1 813 150
- DE-A1-102006 038 688
- GB-A- 2 337 984

## Beschreibung

Die Erfindung betrifft ein Spritzgestänge für Feldspritzen mit Düsenschaltung, dem mehrere Düsen zugeordnet sind, die über Schaltelemente separat schaltbar ausgebildet sind, wobei die Schaltelemente der Düsen über ein serielles Daten-BUS System aktivierbar ausgebildet sind und dass das Spritzgestänges als Schiebgestänge mit Anfahrschutz ausgebildet ist, das aus mehreren zueinander verschiebbaren Teilsegmenten besteht. Spritzgestänge, bei denen die Düsen über Schaltelemente separat schaltbar ausgebildet sind, sind bekannt. Allerdings werden die Düsen üblicherweise in Gruppen oder Teilbreiten zusammengefasst geschaltet, was neben ackerbaulichen Nachteilen auch zu einem höheren Verbrauch von Spritzmitteln führt. Insbesondere eine einfache gezielte düsenweise Schaltung der Düsen ist so nicht möglich. Aus der EP 1 813 150 A2 ist ein Spritzgestänge für Feldspritzen bekannt, das aus einem Mittelteil und einklappbaren Seitenteilen besteht. Die einklappbaren Seitenteile bestehen jeweils aus einer Teilsegmentgruppe mit Teilsegmenten, welche zu einem Paket zusammenschiebbar sind. Dabei sind die Teilsegmente achsparallel zueinander und höhengleich verschiebbar angeordnet. Das als Paket zusammengeschobene Seitenteil kann je nach Einsatzfall verschwenkt werden. Die Schaltelemente der Düsen sind dabei über ein serielles Daten-BUS System aktivierbar. In der Praxis hat sich dieses Gerätes in Bezug auf Größen wie Flüssigkeitsmenge, Tröpfchengröße oder Ausbildung des Spritzkegels noch als verbesserungswürdig erwiesen.

Die vorliegende Erfindung hat die Aufgabe, ein Spritzgestänge für Feldspritzen zu schaffen, bei dem die Düsen auf einfache Weise individuell und gezielt sowie auch unabhängig von Teilbreiten ein- und abgeschaltet werden können.

Diese Aufgabe wird nach einer ersten Ausführungsform der Erfindung dadurch gelöst, dass die erste Düse, die direkt benachbart zu einem verschiebbaren Teilsegment angeordnet ist, derart ausgebildet ist, dass die Ausbringmenge der Düse und der Spritzkegel während des Verschiebens des Teilsegmentes bezüglich Breite und Winkel so verändert werden, dass eine gleichmäßige Querverteilung des Spritzmittels gewährleistet ist. Damit beim Verschieben eines Teilsegmentes keine Flächen unbehandelt bleiben oder mit einer größeren Flüssigkeitsmenge behandelt werden, wird die Düse, die am äußeren Ende des Teilsegmentes angeordnet ist welches das verschiebbare Teilsegment trägt, bei der Überlappung der Spritzkegel so eingestellt, dass weitestgehend eine exakte Querverteilung gegeben ist.

Durch diese Art der Aktivierung bzw. Schaltung der Schaltelemente der Düsen können die Düsen individuell per BUS ohne großen Aufwand an beliebiger Stelle im Spritzgestänge geschaltet werden. Jede einzelne Düse erhält dazu über einen Kommunikations-BUS eine eindeutige Adresse und kann entsprechend angesprochen werden. Die Möglichkeit, die Arbeitsbreite des Spritzgestänges stufenlos oder in Stufen zu verändern, vergrößert den Einsatzbereich einer Feldspritze erheblich, stellt aber auch besondere Herausforderungen an die Düsenschaltung. Diese Anforderungen werden durch die besondere Düsenschaltung mit dem Daten-BUS System in einfacher Weise erfüllt.

Nach einer zweiten Ausführungsform der Erfindung ist daran gedacht, dass ein Halter mit mehreren unterschiedlichen Düsen vorgesehen ist, der direkt benachbart zu einem verschiebbaren Teilsegment angeordnet ist und dass beim Verschieben des Teilsegmentes jeweils die Düse eingeschaltet wird, die bezüglich Breite, Winkel und Ausbringmenge eine gleichmäßige Querverteilung des Spritzmittels gewährleistet.

Diese Ausführungsform benötigt keine komplizierte einstellbare Düse wie zuvor erwähnt. Über einen Stellmotor wird zum Beispiel automatisch jeweils die Düse in Position gebracht und eingeschaltet, die für die erreichte Schiebestellung während des Verschiebens eines Teilsegmentes im Überlappungsbereich einer gleichmäßigen Querverteilung des Spritzmittels am nächsten kommt. Zur Aufrechterhaltung der gewünschten Flüssigkeitsmenge, Tröpfchengröße und Ausbildung des Spritzkegels werden dabei eine oder mehrere Düsen einer Mehrfachdüseneinheit über das BUS System aktivierbar ein- bzw. abgeschaltet

Die Erfindung sieht weiter vor, dass die Schaltelemente elektrisch oder pneumatisch schaltbar bzw. aktivierbar ausgebildet sind. Per Daten-BUS werden die einzelnen Schaltelemente gezielt angesprochen, sie können dann per pneumatischer oder elektrischer Hilfsenergie in ihrer Schaltstellung verändert werden und so die jeweilige Düse ein- oder abschalten.

Die Erfindung beinhaltet auch das Merkmal, dass die Feldspritze eine Steuerung aufweist, die über ein Schaltprogramm gemäß der eingespeicherten Felddaten die Düsen GPS-unterstützt ein- und abschaltet, sowohl bei Erreichen des Vorgewendes als auch im Randbereich des Feldes. Dem Stand der Technik entsprechend können die Düsen des Spritzgestänges automatisch so ein- und ausgeschaltet werden, wie es für die vorliegende Feldkontur optimal oder sinnvoll ist.

Es ist weiterhin vorgesehen, dass die Steuerung der Feldspritze GPS-unterstützt bereits bearbeitete Feldflächen erkennt und bei Überfahren dieser Feldflächen die im Bereich dieser Feldflächen angeordneten Düsen einzeln oder in Gruppen automatisch abschaltbar ausgebildet ist. Dank dieser Ausführungsform der Steuerung der Feldspritze wird sichergestellt, dass jede Stelle des Feldes nur einmal mit Spritzmittel behandelt wird.

Weitere Einzelheiten und Vorteile der Erfindung ergeben sich aus der nachfolgenden Beschreibung und den zugehörigen Zeichnungen, in denen der Erfindungsgegenstand skizzenhaft dargestellt ist. Es zeigen:
- Figur 1: ein Schema der Düsenschaltung und
- Figur 2: eine Rückansicht eines Teils eines Spritzgestänges

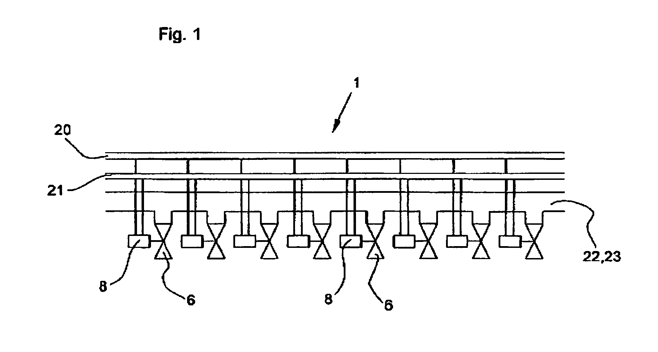

Figur 1 zeigt ein Schema der Düsenschaltung. Das Ansprechen der Schaltelemente 8 erfolgt über den Daten-BUS 20. Die Schaltelemente 8 werden hier elektrisch betätigt. Die Stromversorgung erfolgt über das Kabel 21. Die Spritzflüssigkeit bzw. das Spritzmittel 22, die sich in der Leitung 23 befindet steht unter Druck und gelangt nach Ansprechen und Schalten des jeweiligen Schaltelementes 8 zu den Düsen 6 und wird auf dem Feld versprüht.

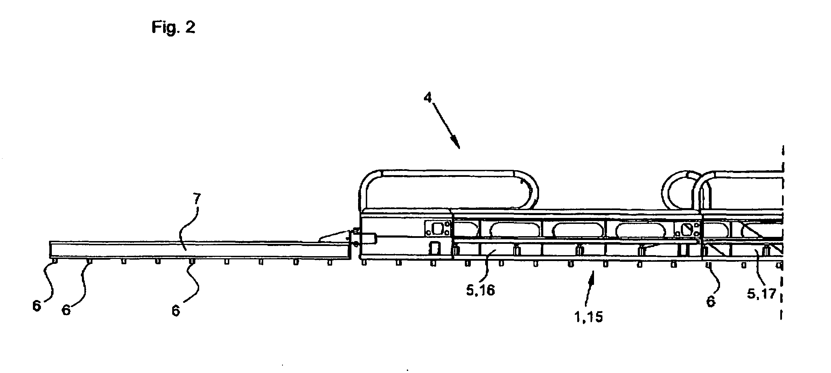

Figur 2 zeigt die Rückansicht des äußeren Teiles 15 des Spritzgestänges 1 mit Teilsegmenten 5 und dem Anfahrschutz 7 in Arbeitsstellung. Die Teilsegmente 5 und der Anfahrschutz 7 sind mit Düsen bestückt. Das Teilsegment 16 wird hier in Relation zum Teilsegment 17 eingeschoben und gehört unter anderem zusammen mit dem Teilsegment 17 und dem Anfahrschutz 7 zu einer Teilsegmentgruppe 4, die über einen nicht dargestellten Rahmen mittelbar mit dem Hubsystem der Feldspritze verbunden ist.

## Patentansprüche

1. Spritzgestänge (1) für Feldspritzen mit Düsenschaltung, dem mehrere Düsen (6) zugeordnet sind, die über Schaltelemente (8) separat schaltbar ausgebildet sind, wobei die Schaltelemente (8) der Düsen (6) über ein serielles Daten-BUS System aktivierbar ausgebildet sind und das Spritzgestänge (1) als Schiebgestänge mit Anfahrschutz (7) ausgebildet ist, das aus mehreren zueinander verschiebbaren Teilsegmenten (5) besteht,
**dadurch gekennzeichnet,**
**dass** die erste Düse (13), die direkt benachbart zu einem verschiebbaren Teilsegment (5) angeordnet ist, derart ausgebildet ist, dass die Ausbringmenge der Düse (13) und der Spritzkegel während des Verschiebens des Teilsegmentes (5) bezüglich Breite und Winkel so verändert werden, dass eine gleichmäßige Querverteilung des Spritzmittels gewährleistet ist
oder
**dass** ein Halter mit mehreren unterschiedlichen Düsen vorgesehen ist, der direkt benachbart zu einem verschiebbaren Teilsegment (5) angeordnet ist und dass beim Verschieben des Teilsegmentes (5) jeweils die Düse eingeschaltet wird, die bezüglich Breite, Winkel und Ausbringmenge eine gleichmäßige Querverteilung des Spritzmittels gewährleistet.

2. Sprifizgestänge für Feldspritzen nach Anspruch 1,
**dadurch gekennreichnet,**
dass die Schaltelemente (8) elektrisch oder pneumatisch schaltbar bzwaktivierbar ausgebildet sind.

3. Sprüzgestänge für Feldspritzen nach Anspruch 1 oder 2,
**dadurch gekennzeichnet,**
**dass** die Feldspritze eine Steuerung aufweist, die über ein Schaltprogramm gemäß der eingespeicherten Felddaten die Düsen (6) GPS-unterstützt ein- und abschaltet, sowohl bei Erreichen des Vorgewendes als auch im Randbereich des Feldes.

4. Spritzgestänge für Feldspritzen nach Anspruch 3,
**dadurch gekennzeichnet,**
**dass** die Steuerung der Feldspritze GPS- unterstützt bereits bearbeitete Feldflächen erkennt und bei Überfahren dieser Feldflächen die im Bereich dieser Feldflächen angeordneten Düsen (6) einzeln oder in Gruppen automatisch abschaltbar ausgebildet ist

## Claims

1. A spray rod assembly (1) for field sprayers with nozzle switch, to which a number of nozzles (6) are assigned, which are formed separately switchable by means of switching elements (8), wherein the switching elements (8) of the nozzles (6) are formed activatable via a serial data-BUS system and the spray rod assembly (1) is formed as a pushing rod assembly with ram protection (7) which consists of a number of sub-segments which can be moved towards each other (5),
**characterized**
**in that** the first nozzle (13) which is arranged directly next to a movable sub-segment (5), is formed in such a way that the delivery rate of the nozzle (13) and the spray cone can be altered during movement of the sub-segment (5) as to width and angle in such a way that an even transverse distribution of the sprayed material is achieved
or
**in that** a holder with a number of different nozzles is provided which is arranged directly next to a movable sub-segment (5) and in that an even transverse distribution of the sprayed material is achieved, as to the width and angle delivery rate, as the nozzle is respectively switched through movement of the sub-segment (5).

2. The spray rod assembly for field sprayers according to Claim 1,
**characterized**
**in that** the switching elements (8) are formed to be electrically or pneumatically switchable or activatable.

3. The spray rod assembly for field sprayers according to Claim 1 or 2,
**characterized**
**in that** the field sprayer has a control unit which switches the nozzles (6) on and off, GPS-supported, by means of a switching program according to the stored field data, upon reaching the headland as well as at the edges of the field.

4. The spray rod assembly for field sprayers according to Claim 3,
**characterized**
**in that** the control unit for the field sprayer recognizes, GPS-supported, already processed areas of the field and is designed so that individual nozzles or groups of nozzles (6) assigned to these field areas can be switched off automatically when passing over these field areas.

## Revendications

1. Tringlerie de pulvérisation (1) pour irrigateurs de champ avec commutation de buses, à laquelle est affectée une pluralité de buses (6) qui sont formée de manière à pouvoir être commutés séparément par des éléments de commutation (8), étant donné que les éléments de commutation (8) des buses (6) peuvent être activés au moyen d'un système de BUS de données série et que la tringlerie de pulvérisation (1) est formée comme tringlerie coulissante avec protection anti-collision (7) se composant d'une pluralité de sous-segments (5) pouvant être déplacés l'un vers l'autre,
**caractérisée**
**en ce que** la première buse (13), qui est disposée directement à côté d'un sous-segment (5) coulissant, est formé de manière à ce que la capacité de décharge de la buse (13) et le cône de pulvérisation puissent être modifiés pendant le décalage du sous-segment (5) en largeur et angle de manière à ce qu'une distribution transversale uniforme du produit à pulvériser soit garantie
ou
**en ce qu'**un support avec une pluralité de différentes buses est prévu, lequel support est disposé directement à côté d'un sous-segment (5) coulissant en en ce que, lors du décalage du sous-segment (5), la buse respective qui garantit une distribution transversale uniforme du produit à pulvériser en largeur et en angle soit activée.

2. Tringlerie de pulvérisation pour irrigateurs de champ selon la revendication 1,
**caractérisée**
**en ce que** les éléments de commutation (8) sont formés de manière à pouvoir être commutés ou activés électriquement ou pneumatiquement.

3. Tringlerie de pulvérisation pour irrigateurs de champ selon la revendication 1 ou 2,
**caractérisée**
**en ce que** l'irrigateur de champ comporte une commande qui, assistée par GPS, active et désactive les buses (6) à l'aide d'un programme de commutation conformément aux données de champ programmées, aussi bien lorsqu'on atteint la tournière que sur les bords du champ.

4. Tringlerie de pulvérisation pour irrigateurs de champ selon la revendication 3,
**caractérisée**
**en ce que** la commande de l'irrigateur de champ détecte, assistée par GPS, les surfaces de champ déjà traitées et, lors de la traversée de ces surfaces de champ, désactive automatiquement individuellement ou en groupes les buses (6) disposées au niveau de ces surfaces de champ.
